# EUROPÄISCHE PATENTSCHRIFT

(11) **EP 4 417 969 B1**
(45) Veröffentlichungstag und Bekanntmachung des Hinweises auf die Patenterteilung: **15.07.2026**
(21) Anmeldenummer: 24156473.1
(22) Anmeldetag: 08.02.2024
(51) Int. Cl.: G01N 27/404

(54) **ELEKTROCHEMISCHER GASSENSOR**
ELECTROCHEMICAL GAS SENSOR
CAPTEUR DE GAZ ÉLECTROCHIMIQUE

(30) Priorität: 15.02.2023 DE 102023103639
(43) Veröffentlichungstag der Anmeldung: 21.08.2024
(73) Patentinhaber: Dräger Safety AG & Co. KGaA, 23560 Lübeck (DE)
(72) Erfinder: Rittemann, Steffen, 23558 Lübeck (DE); Ritz, Beate, 23558 Lübeck (DE); Gotzel, Helge, 23558 Lübeck (DE); Albrecht, Anja, 23558 Lübeck (DE); Schwarz, Tanja, 23558 Lübeck (DE)

(56) Entgegenhaltungen:
- DE-A1- 102004 059 280
- DE-A1- 102014 002 502
- US-A1- 2018 149 614

## Beschreibung

Die vorliegende Erfindung betrifft einen elektrochemischen Gassensor.

Elektrochemische Gassensoren sind bekannt. Elektrochemische Gassensoren weisen eine Messelektrode auf, an welcher es zu einer Umsetzung eines in einem Probegas enthaltenen Zielgases kommt, d.h. zu einer Reaktion mit dem Zielgas. Diese Umsetzung führt zu messbaren elektrischen Größen, aus welchen Aussagen über das Zielgas getroffen werden können.

Vorteilhaft für viele technische Anwendungen ist die Bereitstellung eines elektrochemischen Gassensors auf kompakte Weise. Hierzu ist es bekannt, eine Stapelanordnungen aus Elektroden und Membranlagen einzusetzen, wobei eine Verbindung der Elektroden über in den Membranlagen eingeschlossenen Elektrolyten erfolgt.

Nachteilhaft an derartigen elektrochemischen Gassensoren ist, dass diese empfindlich gegenüber in die Stapelanordnung eintretendes Zielgas sind, da es auf diese Weise zu Verfälschungen im Messergebnis kommen kann.

DE 10 2014 002 502 A1 offenbart einen elektrochemischen Gassensor mit einem Gehäuse, einem Elektrolytreservoir und mit mehreren Elektroden, wobei die Elektroden wenigstens eine Arbeitselektrode und eine Referenzelektrode umfassen und wobei das Elektrolytreservoir mit einem flüssigen Elektrolyt gefüllt ist. Alle Elektroden sind an oder auf einem gemeinsamen Elektrodenträger angeordnet. Die Referenzelektrode ist in seitlichem Abstand zu den im Reaktionsraum angeordneten Elektroden angeordnet.

US 2018 149 614 A1 offenbart einen elektrochemischen Sensor mit einem Gehäuse, das einen Innenraum definiert, mit einer Messelektrode, mit einer Gegenelektrode und mit einem Separator, der einen Elektrolyten aufnimmt, wobei die Elektroden in einer gemeinsamen Ebene ausgerichtet sind, der Separator jede der Elektroden kontaktiert, der Separator eine Vielzahl von geometrischen Merkmalen umfasst, einschließlich Laschen, verdünnte Abschnitte, Ausschnitte und Ringe, und der Separator Variationen in Kompression, Dichte und Oberfläche umfasst. Der Sensor kann eine Diffusionsbarriere um die Messelektrode herum umfassen, während die Referenzelektrode und Gegenelektrode außerhalb der Fläche angeordnet sind, die durch die Diffusionsbarriere definiert wird. Die Diffusionsbarriere kann eine Dichtung bilden und eine Schulter umfassen.

Aus DE 10 2004 059 280 A1 ist ein weiterer elektrochemischer Gassensor bekannt.

Der vorliegenden Erfindung liegt daher die Aufgabe zugrunde, einen elektrochemischen Gassensor bereitzustellen, dessen Messverhalten verbessert ist.

Diese und weitere Aufgaben werden gelöst durch den Gegenstand des Anspruchs 1.

Weitere vorteilhafte Ausgestaltungen werden durch die abhängigen Ansprüche bereitgestellt.

Erfindungsgemäß wird insofern ein elektrochemischer Gassensor bereitgestellt. Der elektrochemische Gassensor weist ein Gehäuse, welches in transversaler Richtung durch eine sich in einer Höhenrichtung des Gehäuses erstreckende Trennwand in einen Gehäuseinnenbereich und in einen Gehäuseaußenbereich unterteilt ist, eine Messelektrode, eine Gegenelektrode, eine Referenzelektrode und eine hydrophile Membran auf. Die Messelektrode und die hydrophile Membran sind in dem Gehäuseinnenbereich angeordnet. Die hydrophile Membran weist einen Membranarm zur Aufnahme der Referenzelektrode auf. Der Membranarm ragt von dem Gehäuseinnenbereich in den Gehäuseaußenbereich, so dass die Referenzelektrode in dem Gehäuseaußenbereich angeordnet ist. Die Messelektrode, die hydrophile Membran und die Gegenelektrode sind in Stapelanordnung in dem Gehäuseinnenbereich angeordnet.

Der vorgeschlagene elektrochemische Gassensor löst die erfindungsgemäße Aufgabe, indem die Referenzelektrode in dem Gehäuseaußenbereich angeordnet ist, während die Messelektrode in dem Gehäuseinnenbereich angeordnet ist. Durch diese örtliche Trennung von Referenzelektrode und Messelektrode wird erreicht, dass die Referenzelektrode nicht oder nur in geringem Maße mit einem zu der Messelektrode gelangenden Zielgas in Kontakt kommt. Die Referenzelektrode kann somit ein möglichst konstantes Referenzpotential bereitstellen und so als besonders zuverlässige Referenz bei der Messung des Zielgases fungieren.

Unter einem elektrochemischen Gassensor wird eine elektrochemische Zelle verstanden, die eingerichtet ist, wenigstens eine gasförmige Substanz (insbesondere ein Zielgas) in einem Gas oder Gasgemisch (insbesondere in einem Probegas) nachzuweisen.

In einem bevorzugten Fall ist der elektrochemische Gassensor als ein Sauerstoffsensor ausgebildet, der eingerichtet ist, Sauerstoff in einem Gas oder Gasgemisch nachzuweisen.

Im Folgenden werden die Begrifflichkeiten "elektrochemischer Gassensor" und "Gassensor" austauschbar verwendet.

Unter der Höhenrichtung des Gehäuses wird eine Erstreckungsrichtung des Gehäuses verstanden, also eine Richtung, die sich senkrecht zu einer Grundfläche des Gehäuses erstreckt.

Unter der transversalen Richtung wird eine Richtung senkrecht zu der Höhenrichtung des Gehäuses verstanden, also eine Richtung, die parallel zu einer Grundfläche des Gehäuses ist.

Unter einem Membranarm der hydrophilen Membran wird ein seitlich (in Bezug auf eine Normalenrichtung der hydrophilen Membran) abstehender Teil der hydrophilen Membran verstanden, welcher eingerichtet ist, die Referenzelektrode aufzunehmen und in den Gehäuseaußenbereich zu ragen. Die hydrophile Membran samt Membranarm erstreckt sich vorzugsweise im Wesentlichen in einer Ebene, so dass eine im Wesentlichen planare hydrophile Membran bereitgestellt wird.

Die hydrophile Membran ist eingerichtet, einen wässrigen Elektrolyten, beispielsweise eine wässrige Lösung umfassend Schwefelsäure, aufzunehmen und mit der Messelektrode sowie mit der Referenzelektrode in Verbindung zu stehen, so dass mittels der hydrophilen Membran und dem darin aufgenommenen Elektrolyten eine Verbindung zwischen der Referenzelektrode und der Messelektrode erreicht wird. Die Messelektrode ist vorzugsweise an oder auf der hydrophilen Membran angeordnet oder steht über weitere Membranen in Verbindung mit der hydrophilen Membran, so dass der Gassensor in Stapelbauweise bereitgestellt ist.

Die Trennwand kann durchgängig ausgebildet sein oder nicht durchgängig ausgebildet sein, beispielsweise kann die Trennwand hierzu ein oder mehrere separate Segmente aufweisen. Die Trennwand kann in Draufsicht ringförmig ausgestaltet sein. Die Trennwand kann sich ausgehend von einer Bodenfläche des Gehäuses erstrecken und vorzugsweise integral mit dem Gehäuse ausgebildet sein. Es wird bevorzugt, dass das Gehäuse und die Trennwand aus einem gasundurchlässigen Material bestehen.

Vorzugsweise weist der elektrochemische Gassensor in einer Unterseite einen Gaseinlass auf, um aus der Umgebung des Gassensors Probegas in Richtung der Messelektrode zu leiten. Ferner bevorzugt ist der Gaseinlass eingerichtet, Probegas in den Gehäuseinnenbereich zu leiten. Vorzugsweise ist die Messelektrode zwischen der hydrophilen Membran und dem Gaseinlass angeordnet, um in dem eintretenden Probegas enthaltenes Zielgas umzusetzen.

Der Gehäuseaußenbereich kann zur bevorratenden Aufnahme des Elektrolyten eingerichtet sein. Insofern ist bekannt, dass ein Elektrolyt in einem elektrochemischen Gassensor durch Veränderung der Umgebungsfeuchte des elektrochemischen Gassensors Wasser aufnehmen und abgeben kann und somit ein Volumen des Elektrolyten innerhalb des Gassensors veränderlich ist. Als Folge der Volumenausdehnung kann der Elektrolyt in den Gehäuseaußenbereich ausweichen und dort als Vorrat bereitstehen. Der Gehäuseaußenbereich und der Gehäuseinnenbereich stehen erfindungsgemäß über den Membranarm in flüssigkeitsleitender Verbindung, um überschüssigen Elektrolyten aus der hydrophilen Membran in den Gehäuseaußenbereich zu leiten und andersherum. In anderen Worten bildet der Membranarm eine Art Docht. Der Gehäuseaußenbereich kann insofern, begrenzt durch eine Bodenfläche des Gehäuses, eine Seitenwand des Gehäuses und durch die Trennwand, wannenartig ausgebildet sein.

Vorzugsweise sind die hydrophile Membran, bevorzugt der Membranarm der hydrophilen Membran, derart mit der Trennwand in Anlage, dass ein Gasdurchtritt von dem Gaseinlass in Richtung des Gehäuseaußenbereichs und insbesondere in Richtung der Referenzelektrode und andersherum unterbunden wird. Dies kann beispielsweise erreicht werden durch bündiges Anordnen der hydrophile Membran und des Membranarms auf oder an der Trennwand, so dass im Wesentlichen kein Spalt zwischen hydrophiler Membran bzw. deren Membranarm und der Trennwand besteht.

Ferner erfindungsgemäß weist die Trennwand eine Aussparung auf, wobei die Aussparung eingerichtet ist, in gasdichter Anlage mit dem Membranarm zu sein.

Hierdurch kann der Membranarm von dem Gehäuseinnenbereich durch die Aussparung hindurchgeführt werden, um in den Gehäuseaußenbereich zu ragen und dabei auf einfache Weise eine gasdichte Anlage des Membranarms mit der Aussparung erreicht werden. Somit kann durch diese gasdichte Anlage auf vorteilhafte Weise ein Gasdurchtritt entlang einer Kontaktfläche zwischen dem Membranarm und der Trennwand unterbunden werden.

Besonders bevorzugt ist die Aussparung derart ausgeführt, dass sie einen vorbestimmten Abstand zu einer Bodenfläche des Gehäuseaußenbereichs einnimmt. Hierzu kann die Aussparung beispielsweise eine Anlagefläche aufweisen, welche den vorbestimmten Abstand zu der Bodenfläche des Gehäuseaußenbereichs aufweisen kann.

Die Bereitstellung des vorbestimmten Abstands bewirkt, dass der Membranarm bei Anlage mit der Aussparung bzw. mit der Anlagefläche nicht bündig auf der Bodenfläche aufliegt. Dies minimiert das Risiko, dass der Membranarm bei einer Montage oder in einem Betrieb, beispielsweise aufgrund von Lageänderungen des Gassensors, Falten wirft, welche zu einer Gasundichtigkeit führen könnten. Die Gasdichtwirkung kann somit vorteilhaft gegenüber einer Ausgestaltung, in welcher der Membranarm bündig auf einer Bodenfläche des Gehäuseaußenbereichs bzw. des Gehäuses aufliegt, verbessert werden.

Ferner erfindungsgemäß weist der Gassensor einen Niederhalter auf, wobei der Niederhalter eingerichtet ist, den Membranarm in gasdichter Anlage mit der Aussparung, vorzugsweise mit der Anlagefläche der Aussparung, wenn vorhanden, zu halten.

Durch den Niederhalter können Freiheitsgrade in der Bewegung des Membranarms relativ zu der Aussparungen bzw. der Anlagefläche eingeschränkt werden, so dass die Gasdichtwirkung verbessert werden kann. Ferner kann der Membranarm durch den Niederhalter mit vorbestimmten Anpressdruck an bzw. auf die Anlagefläche gedrückt werden, wodurch die Gasdichtwirkung des Membranarms weiter verbessert werden kann.

In einer bevorzugten Ausgestaltung kann der Niederhalter ferner dazu eingerichtet sein, neben dem Membranarm auch weitere Teile der hydrophilen Membran in gasdichter, beispielsweis bündiger, Anlage mit der Trennwand zu halten. So können die weiteren Teile der hydrophilen Membran durch den Niederhalter mit vorbestimmten Anpressdruck an bzw. auf die die Anlagefläche gedrückt werden, wodurch die Gasdichtwirkung weiter verbessert werden kann.

Der Niederhalter kann als eigenständiges Bauteil des Gassensors vorgesehen sein.

In einer bevorzugten Ausgestaltung der Erfindung ist das Gehäuse zweiteilig ausgeführt und umfasst ein Bodenelement und ein Deckelelement, wobei Bodenelement und Deckelelement verbindbar sind, um das Gehäuse zu bilden. Beispielsweise können Bodenelement und Deckelelement mittels einer Schnappverbindung verbindbar sein.

Bei dieser bevorzugten Ausgestaltung wird ferner bevorzugt, dass der Niederhalter integral mit dem Deckelelement ausgebildet ist. Der Niederhalter kann beispielsweise als Vorsprung oder als eine Mehrzahl von Vorsprüngen in Form eines oder mehrerer Niederhalterelemente in dem Deckelement vorgesehen sein und durch oder bei einem Verbinden des Deckelelements mit dem Bodenelement in Anlage mit dem Membranarm und gegebenenfalls weiteren Teilen der hydrophilen Membran bringbar sein.

Wie beschrieben weist der Gassensor eine Gegenelektrode auf. Dabei stehen Messelektrode, Referenzelektrode und Gegenelektrode über den Elektrolyten in Verbindung.

Vorzugsweise weist der Gassensor in einer Oberseite eine Druckausgleichsöffnung auf, wobei der Gassensor ferner eine Schutzelektrode aufweist und wobei die Schutzelektrode zwischen der Druckausgleichsöffnung und der Messelektrode angeordnet ist.

Unter einer Schutzelektrode wird insofern eine Elektrode verstanden, welche zu einer Reaktion mit einer unerwünschten Substanz eingerichtet ist, insbesondere zu einer Reaktion mit dem Zielgas oder einem unerwünschten Gas (Störgas), so dass eventuell unerwünscht in den Gassensor gelangendes Zielgas oder Störgas vor Auftreffen auf die Messelektrode umgesetzt werden kann. Ein solcher Fall kann insbesondere vorliegen, wenn eine Druckausgleichsöffnung vorgesehen ist, denn durch diese kann möglicherwiese Zielgas oder Störgas eintreten.

Durch Bereitstellung der Druckausgleichsöffnung ist ein Inneres des Gassensors für einen Druckausgleich mit der Umgebung eingerichtet, wodurch das Messverhalten des Gassensors verbessert werden kann.

Durch Anordnung der Schutzelektrode zwischen der Druckausgleichsöffnung und der Messelektrode kann die Schutzelektrode eventuell durch die Druckausgleichsöffnung eintretendes Zielgas umsetzen, bevor es zu der Referenzelektrode oder zu der Messelektrode gelangen und somit die Messung verfälschen kann. Dabei ist es besonders vorteilhaft, wenn eine Oberfläche der Schutzelektrode größer als eine Oberfläche der Messelektrode ausgebildet ist. Dies bietet darüber hinaus den Vorteil, dass ein Potentialabfall an der Schutzelektrode verglichen mit einer Schutzelektrode mit kleinerer Oberfläche klein ist, so dass das Messverhalten weiter verbessert werden kann.

Vorzugsweise sind die Druckausgleichsöffnung und der Gaseinlass, wenn jeweils vorhanden, in gegenüberliegenden Seiten des Gehäuses angeordnet.

Vorzugsweise ist die Gegenelektrode und/oder die Schutzelektrode auf einer weiteren hydrophilen Membran angeordnet.

Besonders bevorzugt ist die Gegenelektrode und/oder die Schutzelektrode auf einer weiteren hydrophilen Membran angeordnet, welche einen weiteren Membranarm aufweist, wobei der weitere Membranarm und der Membranarm überlappen.

Überlappen bezeichnet in diesem Zusammenhang eine Anordnung des Membranarms und des weiteren Membranarms auf eine Weise, dass diese sich in einer Projektion entlang der Höhenrichtung des Gehäuses (d.h. in einer Draufsicht) wenigstens überschneiden, vorzugsweise deckungsgleich sind.

Auf diese Weise wird die Referenzelektrode zwischen dem Membranarm und dem weiteren Membranarm aufgenommen, was vorteilhaft zu einer Redundanz im Aufbau das Gassensors führt. Damit ist gemeint, dass eine eventuell bei einem Zusammenbau oder während eines Betriebs des Gassensors auftretende Beschädigung entweder des Membranarms oder des weiteren Membranarms kompensiert werden kann. Dies wird erreicht, indem der jeweils andere weitere Membranarm oder Membranarm weiterhin mit der Referenzelektrode verbunden ist, so dass diese folglich über den in der hydrophilen Membran oder weiteren hydrophilen Membran aufgenommenen Elektrolyten weiterhin in Verbindung mit der Messelektrode, der Gegenelektrode und der Schutzelektrode, wenn vorhanden, steht. Eine Beschädigung während eines Betriebs des Sensors kann beispielsweise durch Stöße oder durch Schwingungen auftreten.

Ferner wird auf diese Weise auch in einem normalen Betriebszustand sichergestellt, dass die Referenzelektrode beidseitig über den Membranarm und über den weiteren Membranarm mit Elektrolyt in Verbindung steht.

Indem die Referenzelektrode durch den Membranarm und durch den weiteren Membranarm umgeben ist, ist die Referenzelektrode ferner verbessert gegen mechanische Beschädigungen geschützt.

Ferner vorzugsweise ist bei dieser Anordnung die weitere hydrophile Membran zwischen der Schutzelektrode, wenn vorhanden, und der Druckausgleichsöffnung angeordnet, wobei die Messelektrode zwischen der hydrophilen Membran und dem Gaseinlass, wenn vorhanden, angeordnet ist.

Vorzugsweise umfasst die hydrophile Membran und/oder die weitere hydrophile Membran ein Fasermaterial, insbesondere einen Faservliesstoff.

Besonders bevorzugt besteht die hydrophile Membran und/oder die weitere hydrophile Membran aus einem Fasermaterial, insbesondere aus einem Faservliesstoff.

Die Verwendung eines Fasermaterials reduziert vorteilhaft die Fertigungskosten des Gassensors.

Vorzugweise ist das Fasermaterial als ein Glasfasermaterial, insbesondere als ein Glasvliesstoff ausgebildet. Als Fasermaterial wird ein Glasmikrofaservliesstoff, insbesondere ein Borosilkat-Glasmikrofaservliesstoff bevorzugt. Glasvliesstoff bzw. Glasmikrofaservliesstoff weist aufgrund seiner Mikroporosität eine ausreichend hohe Hydrophilität auf, ohne dass eine weitere Behandlung wie eine Oberflächenbeschichtung des Materials nötig ist. Ein weiterer Vorteil in der Verwendung von Fasermaterialien liegt daher darin, dass diese ihre Hydrophilität über die gesamte Lebensdauer des Gassensors behalten. Dies ist bei anderen Materialklassen, insbesondere bei hydrophilisierten Membranen auf PTFE-Basis nicht der Fall. Im Rahmen der Erfindung wurde erkannt, dass letztere ihre Hydrophilität nach ca. 1,5 Jahren verlieren können und den Gassensor so unbrauchbar machen.

Besonders bevorzugt umfasst die hydrophile Membran und/oder die weitere hydrophile Membran insofern kein PTFE.

Ein weiterer Vorteil der Verwendung von Fasermaterial im Vergleich mit anderen Materialien ist, dass das Fasermaterial besser verformbar ist als beispielsweise Sintermaterialien, so dass sich das Fasermaterial besonders gut an die Trennwand bzw. die Aussparung oder an die Anlagefläche anlegt.

Vorzugsweise weist die hydrophile Membran eine Mehrzahl von Membranarmen auf, wobei jeder der Mehrzahl von Membranarmen von dem Gehäuseinnenbereich in den Gehäuseaußenbereich ragt.

Auf diese Weise kann die Lageunabhängigkeit des Gassensors erhöht werden. Jeder der Mehrzahl von Membranarmen wirkt insofern auf vorbeschriebene Weise als flüssigkeitsleitende Verbindung zwischen Gehäuseaußenbereich und Gehäuseinnenbereich. Somit kann auch bei geneigter Orientierung des Gassensors sichergestellt werden, dass über wenigstens einen der Mehrzahl von Membranarmen Flüssigkeit, d.h. Elektrolyt, geleitet werden kann. Vorzugsweise weist die hydrophile Membran als Mehrzahl von Membranarmen wenigstens drei, besonders bevorzugt wenigstens vier Membranarme auf.

Vorzugsweise ist die Referenzelektrode integral mit dem Membranarm ausgebildet.

Somit kann auf einfache Weise erreicht werden, dass die Referenzelektrode ortsfest relativ zu der hydrophilen Membran ist, so dass die Referenzelektrode bei einer Montage und im Betrieb nicht verrutschen kann.

Beispielsweise kann die Referenzelektrode auf die hydrophile Membran gedruckt werden, um die integrale Ausbildung bereitzustellen.

Vorzugsweise weist der Gassensor in einer Unterseite einen Gaseinlass auf, wobei der Gassensor eine elektrolytdichte, insbesondere eine hydrophobe, Membran aufweist, welche zwischen der Messelektrode und dem Gaseinlass angeordnet ist.

Auf diese Weise kann vorteilhaft verhindert werden, dass Elektrolyt durch den Gaseinlass austreten kann. Die elektrolytdichte Membran ist dabei gasdurchlässig, so dass ein Gaseintritt durch den Gaseinlass möglich ist.

Vorzugsweise weist die elektrolytdichte Membran eine Dicke von nicht mehr als 10 µm auf.

Es wurde im Rahmen der Erfindung erkannt, dass eine derartige Dicke zu einer hinreichend schnellen Messung beiträgt, so dass der Gassensor insbesondere zur Verwendung in beispielsweise Beatmungsvorrichtungen wie Beatmungsgeräten und Anästhesiegeräten geeignet ist.

Die elektrolytdichte Membran kann beispielsweise als PTFE-Membran ausgestaltet sein.

Zwischen Druckausgleichsöffnung und Gegenelektrode kann, falls vorhanden, ebenfalls eine elektrolytdichte und gasdurchlässige Membran mit vergleichbaren Vorteilen angeordnet sein.

Der Gassensor kann vor oder hinter der Druckausgleichsöffnung einen Filter aufweisen. Ergänzend oder alternativ kann der Gassensor vor oder hinter dem Gaseinlass einen Filter aufweisen.

Diese und weitere Merkmale und Vorteile der Erfindung ergeben sich auch aus der Figurenbeschreibung. Dabei zeigt
- **Fig. 1**: eine schematische Schnittansicht eines Ausführungsbeispiels eines erfindungsgemäßen Gassensors,
- **Fig. 2**: eine schematische Schnittansicht eines Ausführungsbeispiels eines erfindungsgemäßen Gassensors,
- **Fig. 3**: eine schematische Schnittansicht eines Ausführungsbeispiels eines erfindungsgemäßen Gassensors,
- **Fig. 4**: eine schematische Schnittansicht eines Ausführungsbeispiels eines erfindungsgemäßen Gassensors,
- **Fig. 5a**: eine schematische Draufsicht eines Ausführungsbeispiels einer erfindungsgemäßen weiteren hydrophilen Membran,
- **Fig. 5b**: eine schematische Draufsicht eines Ausführungsbeispiels einer erfindungsgemäßen weiteren hydrophilen Membran mit Schutzelektrode,
- **Fig. 6a**: eine schematische Draufsicht eines Ausführungsbeispiels einer erfindungsgemäßen hydrophilen Membran,
- **Fig. 6b**: eine schematische Draufsicht eines Ausführungsbeispiels einer erfindungsgemäßen hydrophilen Membran mit Referenzelektrode,
- **Fig. 7**: eine schematische Draufsicht eines ein Ausführungsbeispiels eines erfindungsgemäßen Bodenteils,
- **Fig. 8**: eine perspektivische Ansicht eines Ausführungsbeispiels eines erfindungsgemäßen Bodenteils.

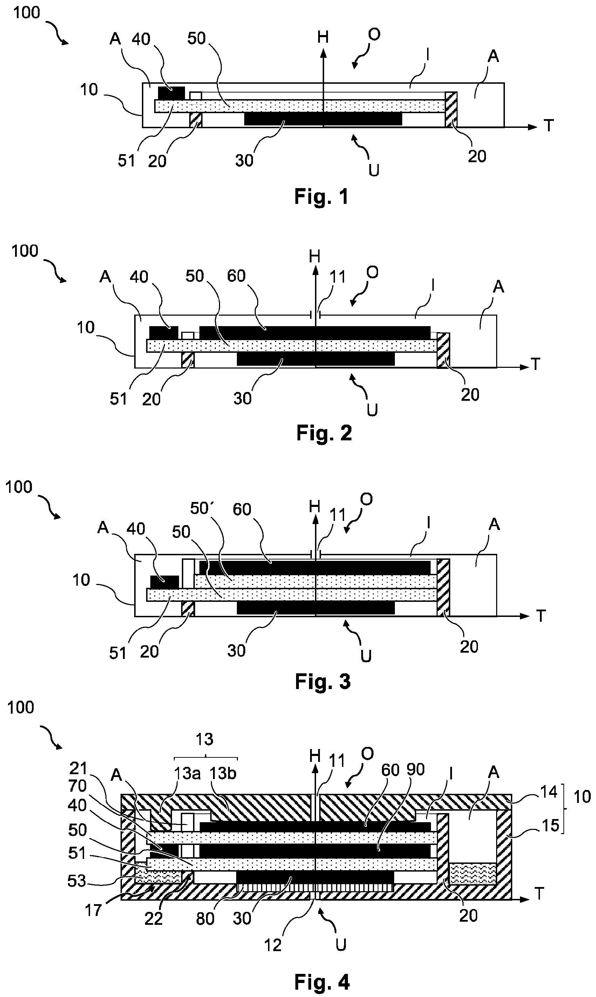

Erfindungsgemäß wird ein elektrochemischer Gassensor 100 bereitgestellt. Beispiele elektrochemischer Gassensoren 100 sind in Fig. 1 bis 4 gezeigt.

Der elektrochemische Gassensor 100 weist ein Gehäuse 10 auf, welches in Fig. 1 bis 3 lediglich schematisch angedeutet ist. Das Gehäuse 10 kann in einer Ausgestaltung zweiteilig ausgeführt sein und ein Bodenelement 15 sowie ein Deckelelement 14 umfassen, welche zu dem Gehäuse 10 zusammensetzbar sein können. Ein derartiges zweiteiliges Gehäuse ist in Fig. 4 schematisch dargestellt.

Wie in Fig. 1 - 4, 7 und 8 gezeigt ist, ist das Gehäuse 10 in transversaler Richtung T durch eine sich in einer Höhenrichtung H des Gehäuses 10 erstreckende Trennwand 20 in einen Gehäuseinnenbereich I und in einen Gehäuseaußenbereich A unterteilt. Die Trennwand 20 kann sich beispielsweise ausgehend von einer Bodenfläche 17 des Gehäuses 10 erstrecken und vorzugsweise integral mit dem Gehäuse 10 ausgebildet sein.

Der elektrochemische Gassensor 100 weist ferner, wie dies in Fig. 1 - 4 dargestellt ist, eine Messelektrode 30, eine Referenzelektrode 40 und eine hydrophile Membran 50 auf. Der elektrochemische Gassensor 100 weist in allen Ausführungsbeispielen, so wie dies auch dargestellt ist, ferner eine Gegenelektrode 60 auf. Wie ferner dargestellt, sind die Messelektrode 30 und die hydrophile Membran 50, sowie vorzugsweise ferner die Gegenelektrode 60, in dem Gehäuseinnenbereich I angeordnet, wo sie eine Stapelanordnung bilden.

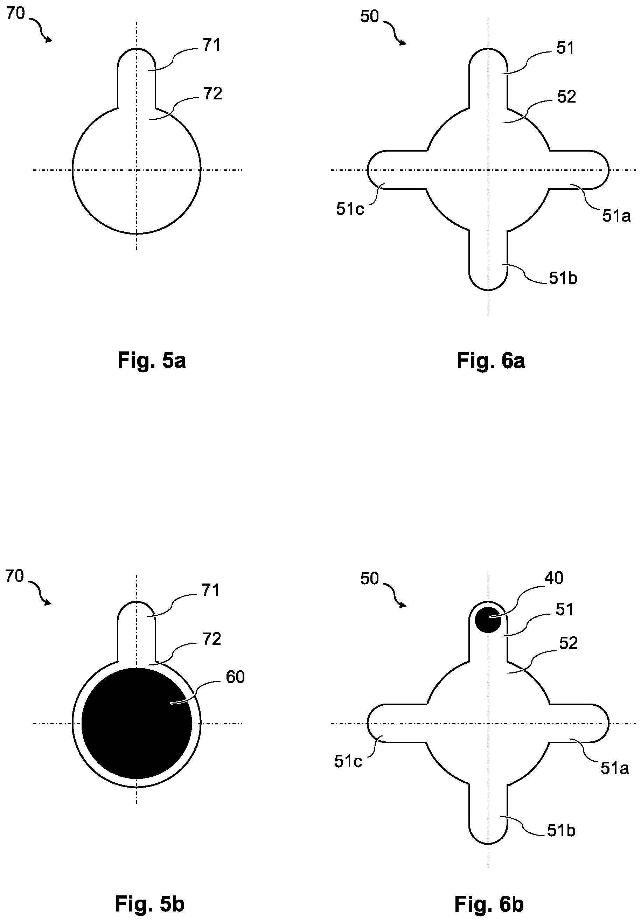

Die hydrophile Membran 50 weist einen Membranarm 51 zur Aufnahme der Referenzelektrode 40 auf, wie dies in Fig. 1 - 4 angedeutet und in Fig. 6a, 6b gezeigt ist. In Fig. 6a, 6b ist gezeigt, dass die hydrophile Membran 50 beispielsweise einen Membrankörper 52 aufweisen kann, welcher in seiner Form beispielsweise einer Trennwand-Innenseite entsprechen und beispielsweise im Wesentlichen kreisförmig sein kann. Von dem Membrankörper 52 kann sich der Membranarm 51 erstrecken.

In Fig. 1 - 4 ist ersichtlich, dass der Gehäuseaußenbereich A wannenartig ausgebildet sein kann, um einen Elektrolyten, in Fig. 4 als Elektrolyt 53 angedeutet, aufzunehmen. Der Gehäuseaußenbereich A kann bodenseitig beispielsweise begrenzt sein durch die Bodenfläche 17, Trennwand 20 und eine Außenseite des Bodenelements 15, wie dies in Fig. 4 dargestellt ist. Der Gehäuseaußenbereich A ist in den dargestellten Ausführungsbeispielen somit zur bevorratenden Aufnahme des Elektrolyten 53 eingerichtet, wobei der Membranarm 51 auf vorbeschriebene Weise eine Art Docht bildet.

Vorzugsweise und in Fig. 6a, 6b dargestellt ist, dass die hydrophile Membran 50 eine Mehrzahl von Membranarmen 51, 51a, 51b, 51c aufweisen kann, wobei jeder der Mehrzahl von Membranarmen 51, 51a, 51b, 51c von dem Gehäuseinnenbereich I in den Gehäuseaußenbereich A ragt. Dabei nimmt einer der Membranarme 51 die Referenzelektrode 40 auf. Die Mehrzahl von Membranarmen 51, 51a, 51b, 51c kann gleichartig ausgebildet sein, wie dies im dargestellten Beispiel der Fall ist, oder verschiedenartig ausgebildet sein.

Vorzugsweise ist die Referenzelektrode 40 integral mit dem Membranarm 51 ausgebildet, wie dies in Fig. 6b ersichtlich ist. Beispielsweise kann die Referenzelektrode 40 auf die hydrophile Membran 50 gedruckt sein, um die integrale Ausbildung bereitzustellen.

Der Membranarm 51 ragt von dem Gehäuseinnenbereich I in den Gehäuseaußenbereich A, so dass die Referenzelektrode 40 in dem Gehäuseaußenbereich A angeordnet ist, wie dies in Fig. 1 - 4 und 7 ersichtlich ist.

In einer bevorzugten und in Fig. 4, 7 und 8 dargestellten Ausgestaltung der Erfindung kann das Gehäuse 10 zweiteilig ausgeführt sein, indem das Gehäuse 10 ein Bodenelement 15 und ein Deckelelement 14 umfasst, wobei Bodenelement 15 und Deckelelement 14 verbindbar sind. Dabei stellt das Bodenelement 15 vorzugsweise die Bodenfläche 17 bereit, von welcher sich die Trennwand 20 erstreckt.

Vorzugsweise weist der elektrochemische Gassensor 100 in einer Unterseite U einen Gaseinlass 12 auf, um aus der Umgebung des Gassensors 100 Probegas in Richtung der Messelektrode 30 zu leiten, wie dies in Fig. 4 schematisch dargestellt ist. Wie dargestellt ist es bevorzugt, dass der Gaseinlass 12 eingerichtet ist, das Probegas in den Gehäuseinnenbereich I zu leiten. Hierzu kann der Gaseinlass 12 beispielsweise mittig in der Unterseite U angeordnet sein. Vorzugsweise ist die Messelektrode 30 wie dargestellt zwischen der hydrophilen Membran 50 und dem Gaseinlass 12 angeordnet.

Vorzugsweise und wie in Fig. 1 bis 4 dargestellt, sind die hydrophile Membran 50 und der Membranarm 51 derart mit der Trennwand 20 in Anlage, dass ein Gasdurchtritt von dem Gaseinlass 12 in Richtung des Gehäuseaußenbereichs A und insbesondere in Richtung der Referenzelektrode 40 und andersherum unterbunden wird.

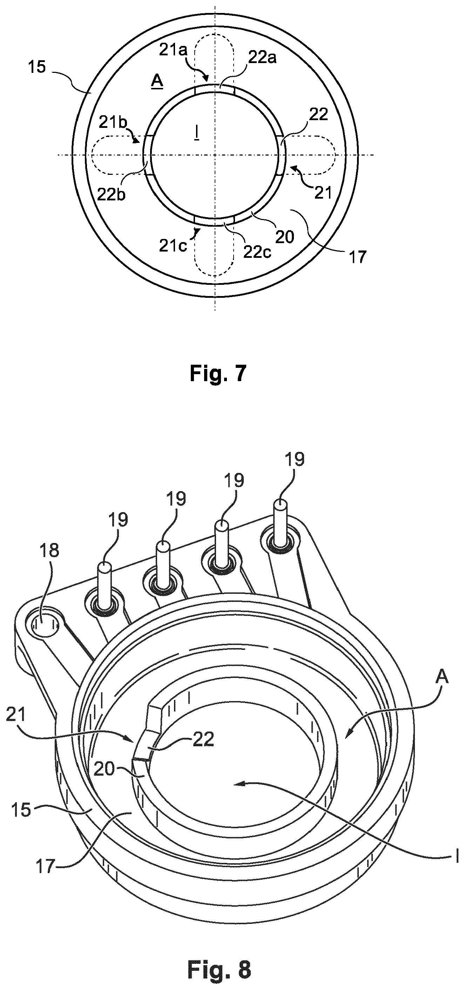

Erfindungsgemäß und in Fig. 1 - 4 angedeutet sowie in Fig. 7 und 8 dargestellt ist, dass die Trennwand 20 eine Aussparung 21 aufweist, welche beispielsweise eine Anlagefläche 22 aufweisen kann, wobei die Aussparung 21, vorzugsweise die Anlagefläche 22, eingerichtet ist, in gasdichter Anlage mit dem Membranarm 51 zu sein.

In der in Fig. 8 dargestellten Variante weist die Trennwand 20 lediglich genau eine Aussparung 21 mit einer Anlagefläche 22 auf, welche mit dem Membranarm 51 korrespondiert. In der in Fig. 7 dargestellten Variante weist die Trennwand 20 eine Mehrzahl von Aussparungen 21, 21a, 21b, 21c auf, beispielsweise wie dargestellt vier Aussparungen 21, 21a, 21b, 21c, die jeweils eine Anlagefläche 22, 22a, 22b, 22c aufweisen können.

In dem Fall, dass die Trennwand 20 eine Mehrzahl von Aussparungen 21, 21a, 21b, 21c aufweist, korrespondieren diese mit der Mehrzahl von Membranarmen 51, 51a, 51b, 51c.

Wie in Fig. 8 ersichtlich, ist es bevorzugt, dass die Aussparung 21 derart ausgeführt ist, dass diese, beispielsweise in Bezug auf deren Anlagefläche 22, einen vorbestimmten Abstand zu der Bodenfläche 17 des Gehäuseaußenbereichs A einnimmt, so dass der Membranarm 51 nicht bündig auf der Bodenfläche 17 aufliegt.

Der Gassensor 100 kann zumindest eine zusätzliche hydrophile Membran 50' aufweisen. In dem Ausführungsbeispiel nach Fig. 3 ist insofern eine zusätzliche hydrophile Membran 50' zwischen der Gegenelektrode 60 und der hydrophilen Membran 50 angeordnet. Dies ermöglicht es, einen vertikalen Abstand (d.h. einen Abstand in Höhenrichtung H) der Gegenelektrode 60 relativ zu der hydrophilen Membran 50 und somit relativ zu der Referenzelektrode 40 wahlweise anzupassen. Somit kann der Stapelaufbau des Gassensors 100 mit höherem Freiheitsgrad bereitgestellt werden.

Erfindungsgemäß weist der Gassensor 100, wie in Fig. 4 dargestellt ist, ferner einen Niederhalter 13 auf, wobei der Niederhalter 13 eingerichtet ist, den Membranarm 51 in gasdichter Anlage mit der Anlagefläche 22 zu halten.

Es ist bevorzugt, dass der Niederhalter 13 integral mit dem Deckelelement 14 ausgebildet ist. Der Niederhalter 13 kann beispielsweise, wie dargestellt, als Vorsprung oder als eine Mehrzahl von Vorsprüngen, beispielsweise in Form eines ersten Niederhalterelements 13a und eines zweiten Niederhalterelements 13b vorgesehen sein. Der Niederhalter 13 kann eingerichtet sein, den Membranarm 51 beidseitig von der Trennwand 20 mittels des ersten Niederhalterelements 13a und der zweiten Niederhalterelements 13b in gasdichter Anlage mit der Aussparung 21 zu halten.

Durch die erfindungsgemäße und in Fig. 4 dargestellte Kombination von Aussparung 21 und Niederhalter 13 kann der Membranarm 51 in der Aussparung 21, beispielsweise über deren Anlagefläche 22, eingespannt werden, wodurch die Gasdichtwirkung zwischen Membranarm 51 und Aussparung 21 verbessert werden kann.

Vorzugsweise und wie in Fig. 2 - 4 dargestellt, weist der Gassensor 100 in einer Oberseite O eine Druckausgleichsöffnung 11 auf.

Ferner vorzugsweise und wie in Fig. 4 dargestellt, weist der Gassensor 100 eine Schutzelektrode 90 auf, wobei die Schutzelektrode 90 zwischen der Druckausgleichsöffnung 11 und der Messelektrode 30 angeordnet ist.

Vorzugsweise sind die Druckausgleichsöffnung 11 und der Gaseinlass 12, wenn wie in Fig. 4 dargestellt jeweils vorhanden, in gegenüberliegenden Seiten, d.h. auf Oberseite 11 und Unterseite U des Gehäuses 10 angeordnet.

Vorzugsweise und wie in Fig. 4 dargestellt, ist die Gegenelektrode 60 und/oder die Schutzelektrode 90 auf einer weiteren hydrophilen Membran 70 angeordnet, welche einen weiteren Membranarm 71 aufweist, wobei der weitere Membranarm 71 und der Membranarm 51, wie in Fig. 3 und 4 ersichtlich, vorzugweise überlappen.

Die weitere hydrophilen Membran 70 mit dem weiteren Membranarm 71 ist in Fig. 5a sowie mit der darauf angeordneten Gegenelektrode 60 in Fig. 5b dargestellt. Beispielsweise kann die hydrophilen Membran 70 einen mit einer Trennwand-Innenseite korrespondieren, beispielsweise einen im Wesentlichen kreisförmigen weiteren Membrankörper 72 aufweisen, von welchem sich der weitere Membranarm 71 erstreckt.

Wie in Fig. 4 ersichtlich ist, kann zwischen Membranarm 51 und weiterem 71 Membranarm die Referenzelektrode 40 aufgenommen sein.

Wie in Fig. 4 ersichtlich ist, kann die weitere hydrophile Membran 70 zwischen der Gegenelektrode 60 und der Druckausgleichsöffnung 11 angeordnet sein, wobei die Messelektrode 30 zwischen hydrophiler Membran 50 und Gaseinlass 12 angeordnet sein kann.

Wie in Fig. 4 ersichtlich ist, kann die weitere hydrophile Membran 70 zwischen der Schutzelektrode 90 und der Druckausgleichsöffnung 11 angeordnet sein, wobei die Messelektrode 30 zwischen hydrophiler Membran 50 und Gaseinlass 12 angeordnet sein kann.

In den dargestellten Ausführungsbeispielen umfasst die hydrophile Membran 50 und/oder die weitere hydrophile Membran 70 ein Fasermaterial, insbesondere einen Faservliesstoff.

Vorzugsweise weist der Gassensor 100, wie in Fig. 4 dargestellt, in seiner Unterseite U den Gaseinlass 12 auf, wobei der Gassensor 100 eine elektrolytdichte Membran 80 aufweist, welche zwischen der Messelektrode 30 und dem Gaseinlass 12 angeordnet ist.

Vorzugsweise weist die elektrolytdichte Membran 80 in dem dargestellten Beispiel eine Dicke von nicht mehr als 10 µm auf.

Der Gassensors 100 kann, wie dies in Fig. 8 dargestellt ist, in einem Randbereich des Bodenteils 15 Aufnahmeöffnungen 18 für Kontaktstifte 19 aufweisen, so dass der Gassensor 100 mittels der Kontaktstifte 19 in ein Messsystem integrierbar ist. Die Kontaktstifte 19 können mittels nicht gezeigten Metalldrähten in Kontakt mit der Messelektrode 30, Referenzelektrode 40 und Gegenelektrode 60 sowie Schutzelektrode 90, falls vorhanden, stehen.

Es wird in diesem Fall bevorzugt, dass eine oder mehrere, vorzugsweise alle, Metalldrähte zur Kontaktierung der vorgenannten Elektroden nicht durch die Aussparung 21 in den Gehäuseinnenbereich I geführt werden, sondern durch eine oder mehrere örtlich von der Aussparung 21 verschiedene Kerben in der Trennwand. Insbesondere für den Fall, dass das Gehäuse zweiteilig ausgeführt ist und die Trennwand eingerichtet ist, in einer bündigen Anlage mit einem Gehäuseoberteil zu sein, wird auf diese Weise ermöglicht, den oder die Metalldrähte durch die eine oder mehrere Kerben in den Gehäuseinnenbereich I zu führen, ohne dabei die Gasdichtwirkung zwischen Membranarm 51 und Aussparung 21 zu verringern.

Der Gassensor 100 kann weitere Elektroden aufweisen. Beispielsweise kann der Gassensor 100 eine weitere Messelektrode aufweisen, an welcher ein weiteres Zielgas umgesetzt werden kann.

Alle hierin offenbarten Merkmale sind beliebig miteinander kombinierbar, soweit dies nicht widersprüchlich ist oder Alternativen betrifft.

### Bezugszeichenliste

- 10: Gehäuse
- 11: Druckausgleichsöffnung
- 12: Gaseinlass
- 13: Niederhalter
- 13a, 13b: Niederhalterelement
- 14: Deckelelement
- 15: Bodenelement
- 16: weiterer Niederhalter
- 17: Bodenfläche
- 18: Aufnahmeöffnung
- 19: Kontaktstift

- 20: Trennwand
- 21, 21a, 21b, 21c: Aussparung
- 22, 22a, 22b, 22c: Anlagefläche

- 30: Messelektrode

- 40: Referenzelektrode

- 50: hydrophile Membran
- 50': zusätzliche hydrophile Membran
- 51, 51a, 51b, 51c: Membranarm
- 52: Membrankörper
- 53: Elektrolyt

- 60: Gegenelektrode

- 70: weitere hydrophile Membran
- 71: weiterer Membranarm
- 72: weiterer Membrankörper
- 80: elektrolytdichte Membran

- 90: Schutzelektrode

- 100: Gassensor

- A: Gehäuseaußenbereich
- H: Höhenrichtung
- I: Gehäuseinnenbereich
- O: Oberseite
- T: Transversale Richtung
- U: Unterseite

## Patentansprüche

1. Elektrochemischer Gassensor (100), aufweisend:
- ein Gehäuse (10), welches in transversaler Richtung (T) durch eine sich in einer Höhenrichtung (H) des Gehäuses (10) erstreckende Trennwand (20) in einen Gehäuseinnenbereich (I) und in einen Gehäuseaußenbereich (A) unterteilt ist,
- eine Messelektrode (30),
- eine Gegenelektrode (60),
- eine Referenzelektrode (40), und
- eine hydrophile Membran (50),
wobei die Messelektrode (30) und die hydrophile Membran (50) in dem Gehäuseinnenbereich (I) angeordnet sind,
wobei die hydrophile Membran (50) einen Membranarm (51) zur Aufnahme der Referenzelektrode (40) aufweist, und
wobei der Membranarm (51) von dem Gehäuseinnenbereich (I) in den Gehäuseaußenbereich (A) ragt, so dass die Referenzelektrode (40) in dem Gehäuseaußenbereich (A) angeordnet ist,
wobei die Messelektrode (30), die hydrophile Membran (50), und die Gegenelektrode (60) in Stapelanordnung in dem Gehäuseinnenbereich (I) angeordnet sind,
wobei die Trennwand (20) eine Aussparung (21) aufweist, wobei die Aussparung (21) eingerichtet ist, in gasdichter Anlage mit dem Membranarm (51) zu sein, und
ferner aufweisend einen Niederhalter (13), wobei der Niederhalter (13) eingerichtet ist, den Membranarm (51) in gasdichter Anlage mit der Aussparung (21) zu halten.

2. Elektrochemischer Gassensor (100) nach Anspruch 1,
wobei der Gassensor (100) in einer Oberseite (O) eine Druckausgleichsöffnung (11) aufweist,
wobei der Gassensor (100) eine Schutzelektrode (90) aufweist, und
wobei die Schutzelektrode (90) zwischen der Druckausgleichsöffnung (11) und der Messelektrode (30) angeordnet ist.

3. Elektrochemischer Gassensor (100) nach einem der vorherigen Ansprüche,
wobei die Gegenelektrode (60) und/oder die Schutzelektrode (90), wenn vorhanden, auf einer weiteren hydrophilen Membran (70) angeordnet ist, welche einen weiteren Membranarm (71) aufweist,
wobei der weitere Membranarm (71) und der Membranarm (51) überlappen.

4. Elektrochemischer Gassensor (100) nach einem der vorherigen Ansprüche,
wobei die hydrophile Membran (50) und/oder die weitere hydrophile Membran (70) ein Fasermaterial, insbesondere einen Faservliesstoff umfasst.

5. Elektrochemischer Gassensor (100) nach einem der vorherigen Ansprüche,
wobei die hydrophile Membran (50) eine Mehrzahl von Membranarmen (51a, 51b, 51c) aufweist, wobei jeder der Mehrzahl von Membranarmen (51a, 51b, 51c) von dem Gehäuseinnenbereich (I) in den Gehäuseaußenbereich (A) ragt.

6. Elektrochemischer Gassensor (100) nach einem der vorherigen Ansprüche,
wobei die Referenzelektrode (40) integral mit dem Membranarm (51) ausgebildet ist.

7. Elektrochemischer Gassensor (100) nach einem der vorherigen Ansprüche,
wobei der Gassensor (100) in einer Unterseite (U) einen Gaseinlass (12) aufweist,
wobei der Gassensor (100) eine elektrolytdichte, insbesondere eine hydrophobe, Membran (80) aufweist, welche zwischen der Messelektrode (30) und dem Gaseinlass (12) angeordnet ist.

8. Elektrochemischer Gassensor (100) nach Anspruch 7,
wobei die elektrolytdichte Membran (80) eine Dicke von nicht mehr als 10 µm aufweist.

## Claims

1. Electrochemical gas sensor (100), comprising:
- a housing (10) which is divided into an inner housing region (I) and an outer housing region (A) in the transverse direction (T) by a partition (20) which extends in a vertical direction (H) of the housing (10),
- a measuring electrode (30),
- a counter electrode (60),
- a reference electrode (40), and
- a hydrophilic membrane (50),
wherein the measuring electrode (30) and the hydrophilic membrane (50) are arranged in the inner housing region (I),
wherein the hydrophilic membrane (50) has a membrane arm (51) for receiving the reference electrode (40), and
wherein the membrane arm (51) projects from the inner housing region (I) into the outer housing region (A) so that the reference electrode (40) is arranged in the outer housing region (A),
wherein the measuring electrode (30), the hydrophilic membrane (50) and the counter electrode (60) are arranged in a stacked arrangement in the inner housing region (I),
wherein the partition (20) has a recess (21), wherein the recess (21) is designed to be in gas-tight contact with the membrane arm (51), and
further comprising a hold-down device (13), wherein the hold-down device (13) is designed to hold the membrane arm (51) in gas-tight contact with the recess (21).

2. Electrochemical gas sensor (100) according to claim 1,
wherein the gas sensor (100) has a pressure equalization opening (11) in a top surface (O),
wherein the gas sensor (100) has a protective electrode (90), and
wherein the protective electrode (90) is arranged between the pressure equalization opening (11) and the measuring electrode (30).

3. Electrochemical gas sensor (100) according to any of the preceding claims,
wherein the counter electrode (60) and/or the protective electrode (90), if present, is arranged on a further hydrophilic membrane (70) which has a further membrane arm (71),
wherein the further membrane arm (71) and the membrane arm (51) overlap.

4. Electrochemical gas sensor (100) according to any of the preceding claims,
wherein the hydrophilic membrane (50) and/or the further hydrophilic membrane (70) comprises a fibrous material, in particular a nonwoven fabric.

5. Electrochemical gas sensor (100) according to any of the preceding claims,
wherein the hydrophilic membrane (50) has a plurality of membrane arms (51a, 51b, 51c), wherein each of the plurality of membrane arms (51a, 51b, 51c) projects from the inner housing region (I) into the outer housing region (A).

6. Electrochemical gas sensor (100) according to any of the preceding claims,
wherein the reference electrode (40) is formed integrally with the membrane arm (51).

7. Electrochemical gas sensor (100) according to any of the preceding claims,
wherein the gas sensor (100) has a gas inlet (12) in a bottom surface (U),
wherein the gas sensor (100) has an electrolyte-impermeable, in particular hydrophobic, membrane (80) which is arranged between the measuring electrode (30) and the gas inlet (12).

8. Electrochemical gas sensor (100) according to claim 7,
wherein the electrolyte-impermeable membrane (80) has a thickness of no more than 10 µm.

## Revendications

1. Capteur de gaz électrochimique (100), présentant :
- un boîtier (10) qui est divisé dans la direction transversale (T) par une paroi de séparation (20) s'étendant dans la direction de la hauteur (H) du boîtier (10) en une zone intérieure de boîtier (I) et en une zone extérieure de boîtier (A),
- une électrode de mesure (30),
- une contre-électrode (60),
- une électrode de référence (40), et
- une membrane hydrophile (50),
dans lequel l'électrode de mesure (30) et la membrane hydrophile (50) sont disposées dans la zone intérieure de boîtier (I),
dans lequel la membrane hydrophile (50) présente un bras de membrane (51) pour la réception de l'électrode de référence (40), et
dans lequel le bras de membrane (51) fait saillie depuis la zone intérieure de boîtier (I) dans la zone extérieure de boîtier (A), de sorte que l'électrode de référence (40) est disposée dans la zone extérieure de boîtier (A),
dans lequel l'électrode de mesure (30), la membrane hydrophile (50), et la contre-électrode (60) sont disposées selon un agencement en empilement dans la zone intérieure de boîtier (I),
dans lequel la paroi de séparation (20) présente un évidement (21), dans lequel l'évidement (21) est conçu pour être en contact de manière étanche aux gaz avec le bras de membrane (51), et
présentant en outre un serre-flan (13), dans lequel le serre-flan (13) est conçu pour maintenir le bras de membrane (51) en contact de manière étanche étanche aux gaz avec l'évidement (21).

2. Capteur de gaz électrochimique (100) selon la revendication 1,
dans lequel le capteur de gaz (100) présente une ouverture d'équilibrage de pression (11) dans un côté supérieur (O),
dans lequel le capteur de gaz (100) comprend une électrode de garde (90), et
dans lequel l'électrode de garde (90) est disposée entre l'ouverture d'équilibrage de pression (11) et l'électrode de mesure (30).

3. Capteur de gaz électrochimique (100) selon l'une des revendications précédentes,
dans lequel la contre-électrode (60) et/ou l'électrode de garde (90), si elle est présente, sont disposées sur une autre membrane hydrophile (70) qui présente un autre bras de membrane (71),
dans lequel l'autre bras de membrane (71) et le bras de membrane (51) se chevauchent.

4. Capteur de gaz électrochimique (100) selon l'une des revendications précédentes,
dans lequel la membrane hydrophile (50) et/ou l'autre membrane hydrophile (70) comprennent un matériau fibreux, en particulier un tissu non tissé.

5. Capteur de gaz électrochimique (100) selon l'une des revendications précédentes,
dans lequel la membrane hydrophile (50) présente une pluralité de bras de membrane (51a, 51b, 51c), dans lequel chacun parmi la pluralité de bras de membrane (51a, 51b, 51c) fait saillie depuis la zone intérieure de boîtier (I) dans la zone extérieure de boîtier (A).

6. Capteur de gaz électrochimique (100) selon l'une des revendications précédentes,
dans lequel l'électrode de référence (40) est réalisée d'un seul tenant avec le bras de membrane (51).

7. Capteur de gaz électrochimique (100) selon l'une des revendications précédentes,
dans lequel le capteur de gaz (100) présente une entrée de gaz (12) dans un côté inférieur (U),
dans lequel le capteur de gaz (100) présente une membrane étanche aux électrolytes (80), en particulier une membrane hydrophobe, qui est disposée entre l'électrode de mesure (30) et l'entrée de gaz (12).

8. Capteur de gaz électrochimique (100) selon la revendication 7,
dans lequel la membrane étanche aux électrolytes (80) présente une épaisseur qui n'est pas supérieure à 10 µm.
